# EUROPEAN PATENT APPLICATION

(11) **EP 4 292 959 A1**
(43) Date of publication of application: **20.12.2023**
(21) Application number: 21925123.8
(22) Date of filing: 01.04.2021
(51) Int. Cl.: B65G 43/10, B65G 47/42, B65G 47/248, B41M 1/40, B65B 61/02, B65B 65/08

(54) **DEVICE AND METHOD FOR BARCODE ENGRAVING ON DIFFERENT HYDRAULIC COUPLINGS, WITH AUTOMATIC POSITIONING FOR COUNTING, ENGRAVING AND PACKAGING PARTS**

(30) Priority: 12.02.2021 BR 102021002718
(71) Applicant: Dominik Comercio e Industria de Metais e Equipamentos Ltda, 88113-650 São José (BR)
(72) Inventor: REITZ, Cristiano, 88025-000 Florianópolis (BR)
(74) Representative: De Pablos Riba, Juan Ramon
(86) International application number: PCT/BR2021/050135
(87) International publication number: WO 2022/170407

(57) **Abstract**

This invention belongs to the pipe and connection production sector, and refers, more specifically, to equipment and the transporting method of connections to be counted, stamped and packaged, with the parts being collected directly from the injector extraction module, positioning each item autonomously for countingand stamping the barcode, without human intervention, after selecting the connection model in the equipment's HMI, with the delivered items packaged and labeled at the end of the process. Therefore, the parts delivered to the system and are mechanically positioned by means of fins, accessories molded by part model and varied sensors, all integrated into the logical control of the equipment to ensure the correct positioning of the parts. It is subdivided into steps where each step is responsible for performing a movement, where at the end the part is correctly positioned for the barcode to be stamped and subsequent packaging.

## Description

### Technological sector of the invention

In general, this invention belongs to the pipe and connection production sector, and refers, more specifically, to equipment and the transporting method of parts to be positioned, stamped and packaged, with the parts being collected directly from the injector extraction module, positioning each item autonomouslyfor counting and stamping the barcode, without human intervention, after selecting the connection model in the equipment's HMI, with the delivered items packaged and labeled at the end of the process.

### Prior art

The PVC pipe and fittings sector is characterized by belonging to the group of non-traditional or dynamic companies. This type of company, according toFerraz et al. (1997), incorporates significant technological density in its processes, being those more recent in the industrial organization, which are characterized by incorporating great technological density or, for being a source of technical progress for other industries, through the supply of equipment or strategic inputs ofsuperior technological content. It is of great importance for companies in this sector to assess the intensity with which the determining forces of competition present themselves structurally, so that they can recognize strategic alternatives capable of ensuring their maintenance in the market, with significant profitability.

The pipe and connection industry is characterized by the intensive use of PVC as a basic raw material, which is supplemented with other inputs, usually chemical additives, for the operationalization of production. The sector has undergone gradual changes in several aspects, among which the commitment to the quality of products and services provided to meet consumer requirements.

As can be seen in the sector, there is a concern with the automation of packaging and marking steps (both labels on packaging and marking on the product itself), steps considered expensive for the production process of pipes andconnections in general. Chinese documents CN208930666 and CN108943639 are examples of this concern. Although these are processes aimed at PVC pipes, and not exactly the connections, it can be noted that there is an interest in automating the marking of the product. In these cases, the process is done shortly after the product is removed from the extruder.

Most of the solutions found use equipment commonly used in production lines, with specific adaptations to achieve the proposed objectives. Patent documents CN210192034 and CN110282206, for example, present the complete process for marking and packaging connections. Document CN108296183 also presents similar solutions to achieve the same objective, but with a unique identification system and the option to return suboptimal parts.

CN208775914 and CN204184898 present specific solutions that can be incorporated into the automation of production steps. These are solutions applied on conveyors for the vertical and horizontal transport of pipes.

The current systems available have a great need for mechanical adjustments, which are manually done by operators, resulting in high configurationtimes and high possibility of errors.

With an automatic system, stops are eliminated for adjustments and stamping errors by positioning parts, and transportation and storage time is eliminated until the items are properly marked and packaged for shipment.

### Innovations and objectives of the invention

In view of the problems of prior art not yet solved with regard to the automation of the production line, this invention reveals equipment and the transporting method of parts to be counted, stamped and packaged, with the connection parts being collected directly from the injector extraction module, in which the parts were manufactured, positioning each item properly and autonomously for counting and stamping the barcode, without human intervention, after selecting the connection model in the equipment's HMI. With the items being delivered, packaged and labeled at the end of the process.

The equipment is used to stamp the barcode, manufacture date and lot, for tracking purposes throughout the life of the parts, performed after the injection stepof the items. The equipment has as a distinct feature, its automatic positioning system along with the stamping and packaging modules. Where problems with storage and transport time to other sectors of the manufacturing area are eliminated. As it is impossible to stamp and package immediately after the injection step, logistics is necessary that involves the transport and storage ofthese parts until they have the barcode stamped on and are subsequently packaged, with these processes being carried out basically using manual equipment and in separate steps. This causes the need for a long wait time between injection and packaging. With the equipment having these functions integrated and automated, this period can be reduced from days to minutes, without the need to store the parts that have not been stamped or packaged.

### Description of the attached drawings

For this invention to be fully understood and carried out by any technician inthis technological sector, it will be described in a clear, concise and sufficient manner, based on the attached drawings that illustrate and support it listed below:
**Figure 1** depicts the perspective view of the equipment with the first conveyor receiving the injector parts;
**Figure 2** depicts the perspective view of the external conveyors of the equipment, highlighting the second conveyor that receives the parts and transports them to thereceiver;
**Figure 3** depicts the perspective view of the receiver directing the parts to the positioner;
**Figure 4** depicts the perspective view of the longitudinal positioner with rollers receiving the parts that are deposited on the rollers;
**Figure 5** depicts the rear perspective view of the longitudinal positioner with rollersacting in opposite directions, forcing the parts to rotate on their axis until they arein the longitudinal position for the third conveyor;
**Figure 6** depicts the side view of the equipment with the third conveyor carrying the parts that will be turned by the rotating tippers;
**Figure 7** depicts the top view of the equipment showing the flow of the parts that return to the start of the cycle;
**Figure 8** depicts the left side view of the equipment, highlighting the assembly of the conveyors and components that receive the parts from the longitudinal positioner;
**Figure 9** depicts the perspective view of the operation of the reduction guide, highlighting the activation of the pneumatic cylinder that moves the guide;
**Figure 10** depicts the front view of the assembly of the cylinder set of the part tipping system;
**Figure 11** depicts the front view of the roller system at the two different heightlevels, being determined by a pair of vertically mounted pneumatic cylinders;
**Figure 12** depicts the front view of the tipping selection, with the two tipping directions selected with activation of a horizontally mounted pneumatic cylinder;
**Figure 13** depicts the side view of the positioning possibilities for a Te connection after step 3;
**Figure 14** depicts the front view of the tipped part in step 4 on the left, and of the smaller base part facing down to the right that will be tripped in step 5;
**Figure 15** depicts the front view of the inactive and functioning part tipping system;Figure **16** depicts the positioning and stamping cycle by part model in step 6, with emphasis on the piping elbows that have been tipped correctly and slide freely through the turning mechanism;
**Figure 17** depicts the positioning and stamping cycle by part model in step 6, with emphasis on the piping elbows that have been tipped correctly, requiring a 180° turn through the rotation mechanism;

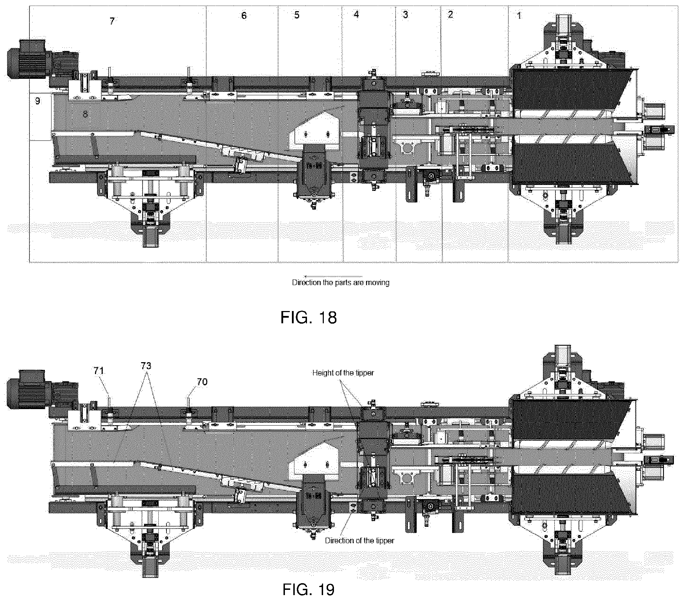

**Figure 18** depicts the top view with the division of the 9 part positioning steps;
**Figure 19** depicts the top view of the equipment;
**Figure 20** depicts the sectional view of the equipment;
**Figure 21** depicts the perspective view of the equipment, with emphasis on the stamp area;
**Figure 22** depicts the positioning and stamping cycle by part model, with emphasis on Te connections with 20 to 110 gauge;
**Figure 23** depicts the positioning and stamping cycle by part model, with emphasis on the piping elbows with 20 to 110 gauge;
**Figure 24** depicts the positioning and stamping cycle by part model, with emphasis on weldable sleeves with 20 to 110 gauge;
**Figure 25** depicts the positioning and stamping cycle by part model, with emphasis on the reducer connections;
**Figure 26** depicts the positioning and stamping cycle by part model, highlighting the inclined reducer connections when passing through the junction of the conveyors;
**Figure 27** depicts the positioning and stamping cycle by part model, highlighting the reducer connections and illustrating the operation of the reducer guide, which limits the movement of the reducer when it is passing over the joint between the conveyors to prevent the reducer from being in any position illustrated in Figure 26.

### Detailed description of the invention

This invention discloses technology that automatically positions plastic, aluminum or other material connections that can be counted and receive barcode printing/stamping, without this material damaging the components of the equipment due to weight, dimension, or inadequate chemical composition of the items.

First, the parts (6) are taken to the positioning system, by two conveyor belts (1)(2), the first (1) receives the parts (6) directly from the injector and takes them to the second conveyor (2), with continuous or intermittent movement, according to the needs of each connection model. The intermittent mode is responsible for supplying the system in a more cadenced manner, preventing a large volume of parts (6) from reaching the system at the same time, preventing back ups due to a disoriented increase in the flow of parts. The parameters of the conveyor, both continuous and intermittent, are available in the part requirements and may have their values changed for different models. Then the parts are delivered to the conveyor belt (2), which is responsible for vertically transportingthe parts and supplying the positioning system.

The conveyor belts (1)(2) external to the equipment have a programmable speed adjustment and an intermittent mode available, where it is possible to determine the time where each conveyor belt is turned on and off separately, as already discussed.

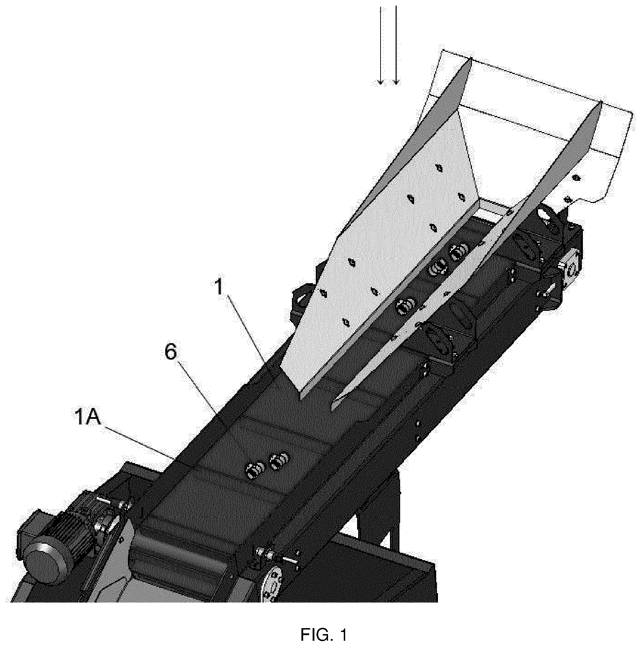

According to Figure 1, the items (6) to be stamped and packaged arecollected directly from the injector that manufactured them, starting the process soonafter leaving the injection mold, which fall onto the first conveyor using gravity (1).

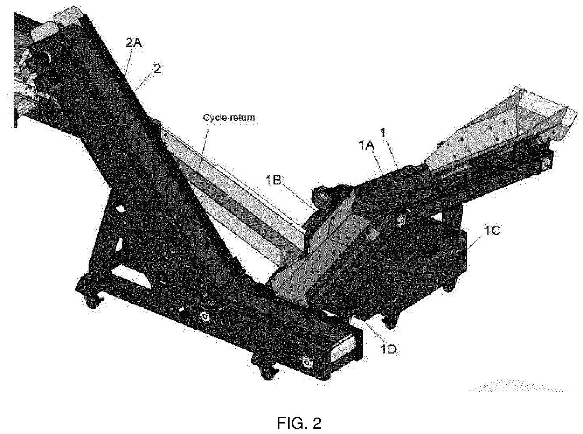

The conveyor (1) is constructed based on a strap equipped with rubber strips (1A), pulled by a geared motor and driven with a frequency inverter. Its structure is made of steel and rolling shafts. And it is responsible for collecting the parts of the injector and transporting them horizontally to the conveyor (2), as shown in Figure 2. The conveyor belt (1) uses strips (1A) to lift the parts (6) up to a gate system that opens to accumulate the parts in a reservoir (1C), when the equipment has an emergency situation, which forces it to stop the operation. In normal operation, the gate (1B) is closed and the parts slide on a slide (1D) to the conveyor (2).

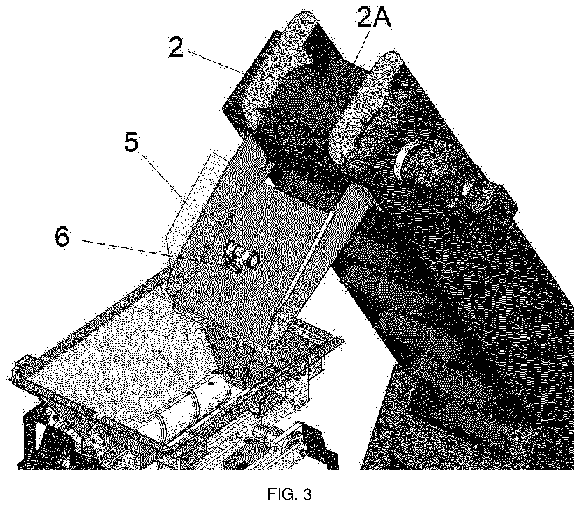

The conveyor belt (2) is constructed using the same principles as theconveyor belt (1), containing rubber strips (2A) welded to the rubber belt, as it is responsible for vertically transporting the parts to the receiver (5) as shown in Figure 3.

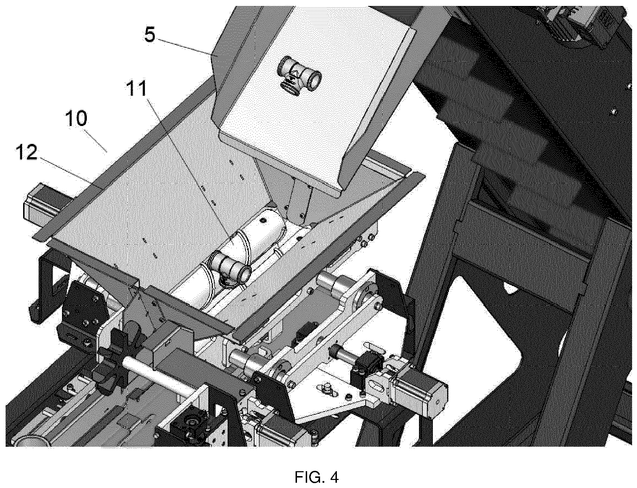

The receiver (5) consists of an inclined tray coupled to the conveyor (2) and is responsible for directing the parts to the longitudinal positioner (10), whichcontains gutters (12) that direct the parts (6) to the helical roller set (11) equipped with helical gears that rotate in opposite directions, aligning theparts (6) in the longitudinal direction to the conveyor (3), as shown in Figure 4. Optionally, the receiver (5) can be replaced by a meter coupled to an electromagnetic vibrator that provides continuous and controlled movement, causing the parts to fall in a controlled amount; responsible for preventing simultaneous parts from entering (6) into the longitudinal positioner (10).

### Step 1

In the first step, the parts (6) are delivered by the conveyor belt (2) falling bygravity onto the gutters (12) that prevent them from falling out of the mechanism and direct them to the helical rollers (11). The distance between the rollers delimitsthe measurement of the gauge of the items so that only the parts (6) that havetheir largest dimension in the direction of movement of the conveyor can fall onto the conveyor (3).

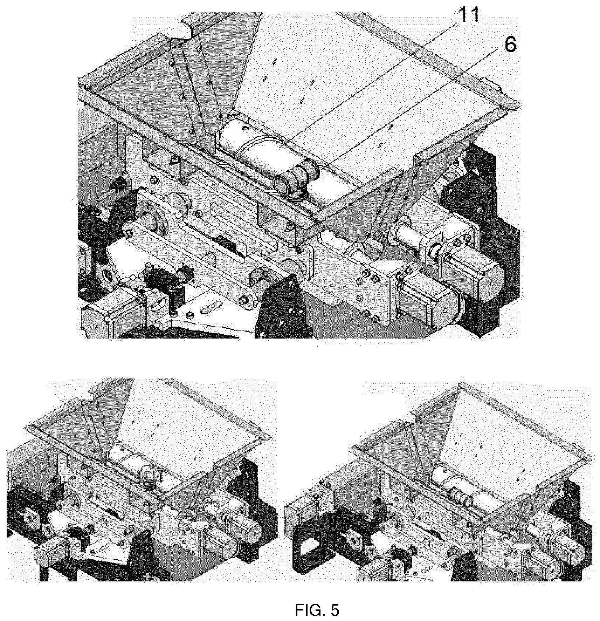

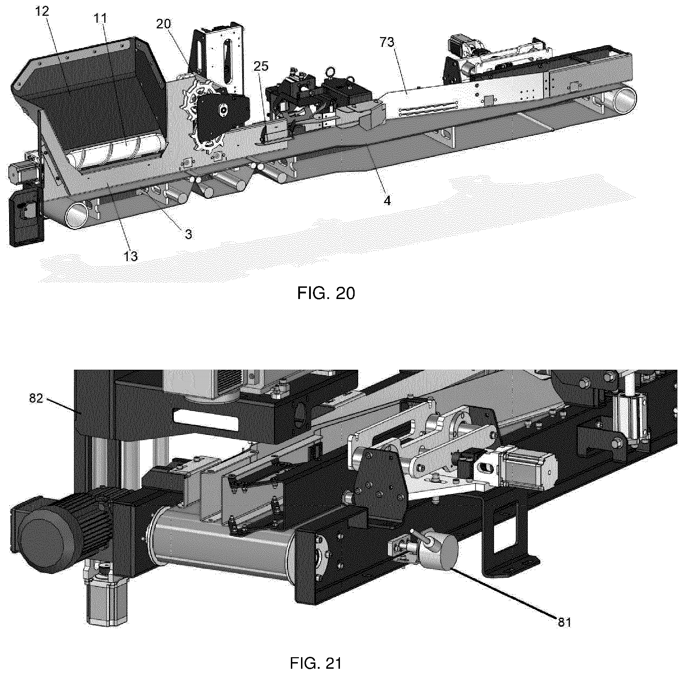

According to Figure 5, the rollers (11) act in opposite directions forcing the parts (6) to rotate on their axis until the conveyor belt (3) is in the longitudinal position,falling by gravity onto the conveyor (3) and having its lateral movement eliminated by two lateral limiters (13) (shown in Figure 20). The helical rollers (11) are madeof polymeric material and driven by stepper motors with constant speed within the process. This roller system, (11) along with the lateral limiters (13), has a linear movement mechanism for each side of the conveyor (3), being adjusted according to the gauge of the parts (6) being worked on. Its movement is determined by electronic control and driven by stepper motors and trapezoidal spindles. Once on the conveyor belt (3), the parts (6) have their degrees of freedom almost entirely annulled, with only three possibilities depending on the connection model.

### Step 2

In this step, there are rotary tippers (20) that turn the parts (6) that are consonant with the delimited height on the conveyor, (3) when necessary. The height is determined according to the shape of each part, allowing only properly laid parts to pass through, which eliminates one to two possibilities of positions depending on each model.

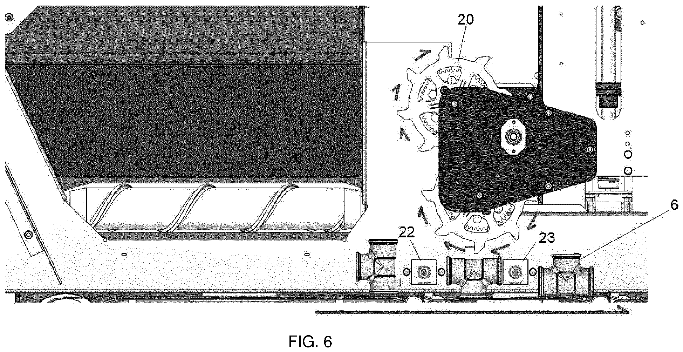

The conveyor (3) is constructed on the basis of a strap equipped with rubber splints (1A), pulled by a geared motor and driven with a frequency inverter. It is responsible for transporting the parts (6) to the rotating tippers (20) to position the parts, as shown in Figure 6, where a part that has been positioned is demonstrated, and another in the vertical position that will need to be repositioned.

Another possible position for the part is eliminated
(6) by means of the tippers (20) equipped with rods (21) on the cardinal and collateral axes that touch the parts (6) at their upper end, causing them to rotate against the movement of the conveyor (3), forcing them to be positioned horizontally, which will be the only possibility for the parts (6) to continue on the conveyor (3). The rotary tippers (20) are driven by a stepper motor with constant speed and have the height determined in the electronic control of the equipment, with the height variation being carried out by a lifting mechanism with stepper motor and spindle with trapezoidal thread. Preferably, two tippers (20) are used instead of one, allowing the parts that are thrown upwards to eventuallyreturn to the longitudinal positioner (10); with one tipper (20) only and some parts may move over it.

This mechanism has a pair of sensors (22)(23), a first contact (22) sensor with the part and a sensor (23) after, and together with the reversible conveyor (3A), enable the function of protecting against back ups when tipping. In normal operation, the part (6) passes through the first sensor (22) before the tippers (20) and after being turned, will pass in front of the second sensor (23) after a short known time interval, which is given by the ratio of the distance between the sensors (22)(23) and the speed of the conveyor (3). Each part (6) will have a specific time to be positioned in addition to the time of passage through the sensors (22)(23). When the system verifies that the part (6) has already reached the first sensor (22) and a longer time than specified for the model is reached, without the second sensor (23) being activated, the control understands that there was a back up in the tipping procedure. Therefore, the rotation of the conveyor belt
(1) is reversed, freeing up space to allow the correct positioning of the part (6) and unclogging the system that returns to normal operation. The time limit for this passage between one sensor and another is configurable according to the need and saved for each part model. When this procedure that prevents the back up of parts is performed a few times without success (number of times specified in the model requirements), the equipment enters the part extraction mode that can be called "Cleaning 1".

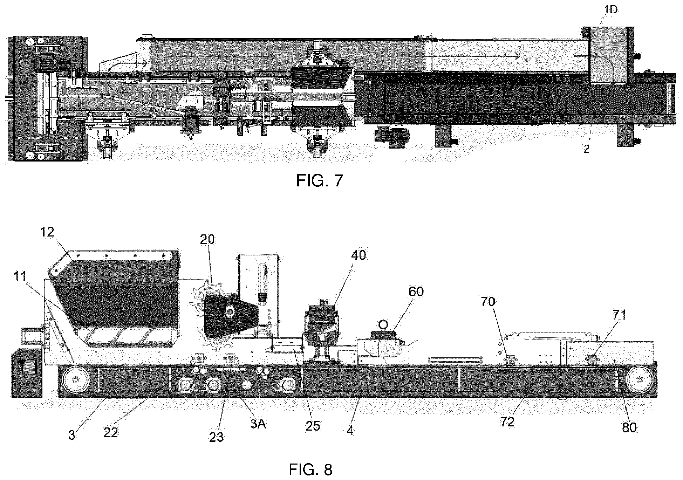

The cleaning mode in question is responsible for removing all the parts (6) that are on the conveyor (3) and expelling them so that they return to the input conveyor (1), returning to the cycle as shown in Figure 7. The procedure consists of opening the lateral bulkheads (13), raising the tippers (20), to release the parts
(6) that are stuck, connecting the conveyor (3) and the air nozzle (72) to remove them from the system and return to the start of the cycle on the conveyor (3) untilthere are no parts (6) obstructing the operation of the process.

### Step 3

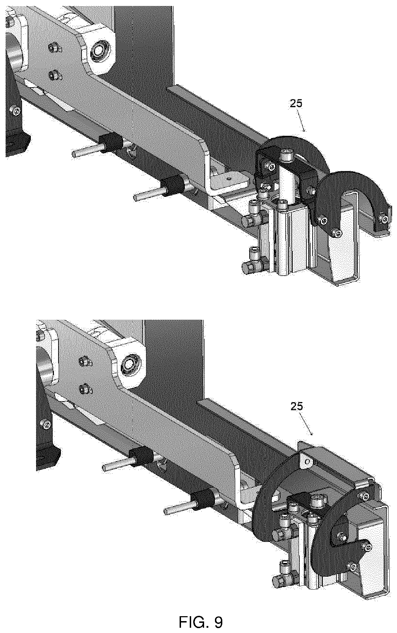

In this step, there is the division between the conveyors (3) and (4) of the positioner, necessary to create a separation between the parts (6), avoiding the error in the reading of the number of parts and also in the start stamping signal.For the reducer parts, it has a guide (25) with an automatic mechanism, by means of a pneumatic cylinder (30) that when lowering removes it from the path, being activated in the preset of the equipment, as shown in Figure 9.

### Step 4

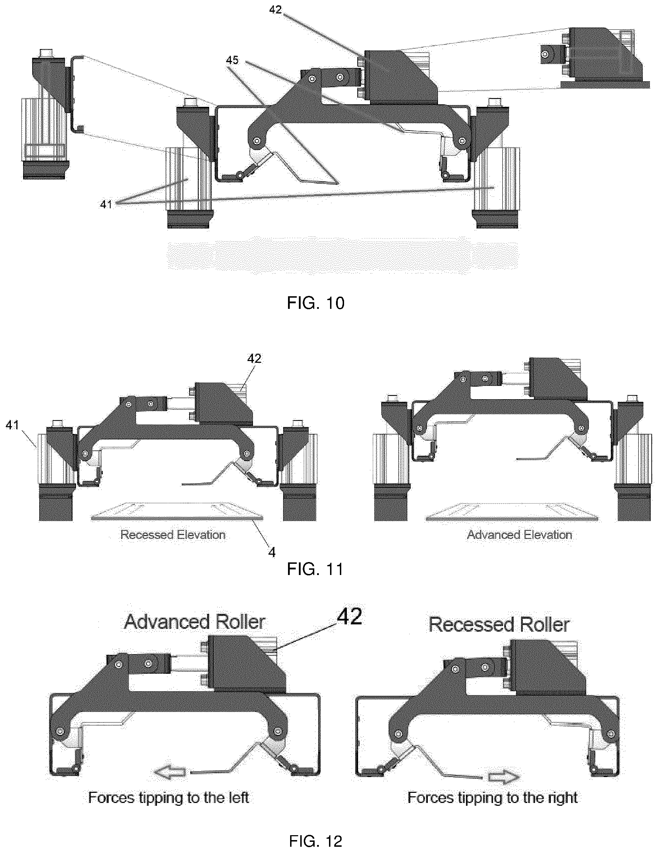

On the conveyor, (4) there are position sensors (not shown) to determine which side the part (6) should tip over by means of the pneumatic tippers (40). Each tipper (40) is based on a set of double-acting cylinders (41)(42) driven with a double-solenoid valve, as shown in Figure 10.

In this step, a system with a pneumatic tipper (40) is presented where two movements are performed: the height is adjusted and the side of the fin is selected, (45) which is responsible for guiding the part (6) so that it falls to its opposite side.

As illustrated in Figure 11, the height adjustment movement is done by the pneumatic cylinders (41) to determine which gauge of the parts will be used by having the fins (45) work at the correct height to perform lateral tipping. This adjustment is made on the part preset.

According to Figure 12, the selection of which side the part (6) should tip over is made by alternating which side the fin (45) of the flipper will be usedmaking the controlled obstruction of the path where the part passes through the fin, forcing it to tip laterally in the opposite direction to that of the selected fin. This selection is made by means of a horizontally mounted pneumatic cylinder (42), and its stroke limits are used for the system to recognize which position is selectedof the fins.

This mechanism is used for Te and Elbow connections. For other models of parts, the mechanism is raised (shown in Figure 11 on the right) so that the parts move freely under the system, without any interaction with the objects, since it is notnecessary to use.

For the Te, the mechanism is selected in the preset, and active movementis not necessary.

### Step 5

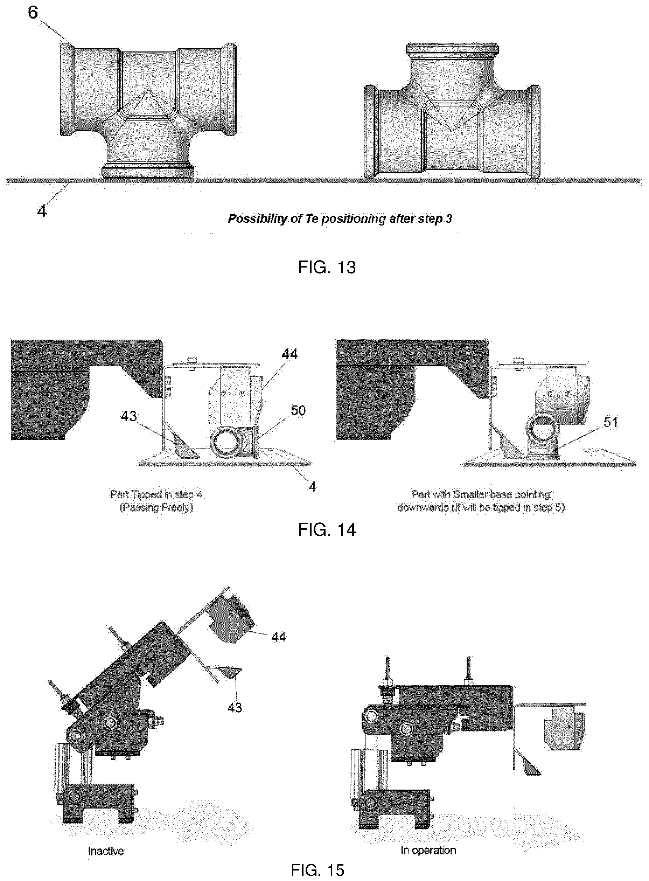

As shown in Figures 13 to 15, in this step there is a passive tipping system for the Te connections, where a mechanism is presented so that it is placed or removed from the route with the pneumatic tipper (40).

The passive tipping system works as follows: the conveyor belt (3) transports the parts through the rotating tippers (20) of Step 3, where there are twopossible positions (50)(51) for this part model. In Step 4, parts (6) with the larger base (51) facing downwards are tipped to the right as shown in Figure 14 on the right; the others pass freely (50), as shown in Figure 14 on the left. The system works using the inertia and friction that the conveyor belt (4) provides to the part (6), along with the bulkheads. When the part (6) reaches the bulkheads (43)(44), it suffers a sudden brake, causing it to rotate guided by them, remaining in the desired position.

In summary, the part that will be as the part on the right side of Figure 14 is turned in the tipper of Step 5, being in the position equal to the part on the left side of Figure 14 once positioned in Step 4, which pass directly through the bulkhead (44) without any interference. The part from Step (4) that is positioned (51) similar to the part to the right of Figure 14, enters the bulkhead equal to the depiction of Figure 13. When it enters the bulkhead, it will first hit the upper bulkhead (44), which will cause it to be thrown to the left by the lower bulkhead (43) to rotate itand tip it sideways, as in the position (50).

The mechanism will be modified to be manually fitted to a pneumatic base, which raises or not the bulkheads, which will be manually changed in the machine preset, as shown in Figure 15. And it should be noted that it works similarly for Te 50 mm and Te 25 mm parts, according to configurationadjustments.

### Step 6

In this step, there is a passive rotation system (60) exclusive to the elbow and 90° curve. All elbows and curves are tipped to the same side in Step 4, requiring a 180° turn in the parts depending on the position they are in.

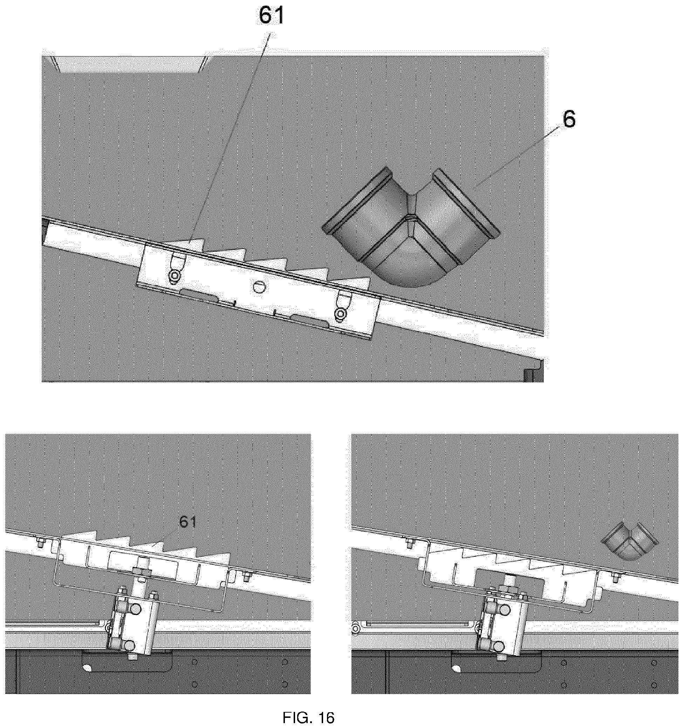

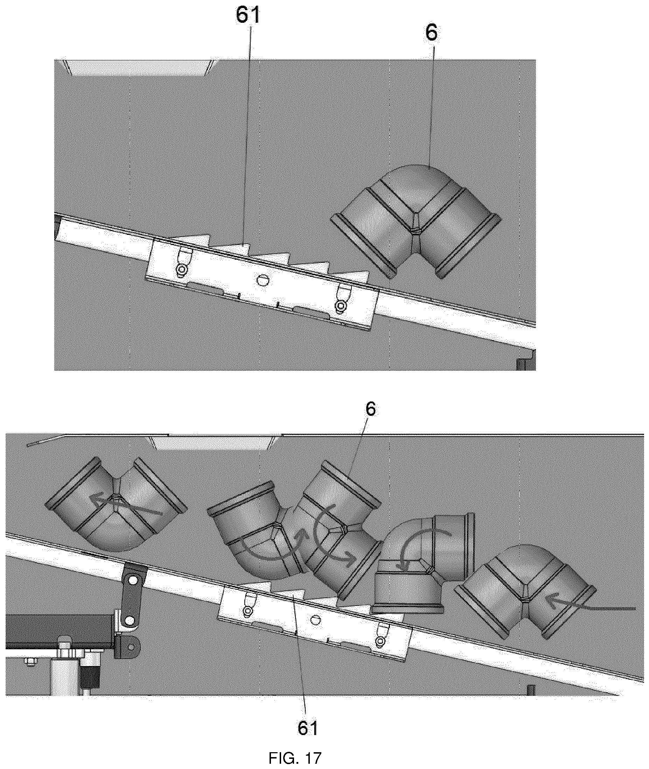

This system has a specific shape so that the parts that are in the desired position, slide through the system and continue on until they are stamped without modifying their position as shown in Figure 16. On the other hand, the parts that are opposite to the desired position as illustrated in Figure 17, are stuck in the bulkheads (61) and the movement of the conveyor (4) forces the part to rotate 180°, all with the same position for stamping.

### Step 7

In the last step before stamping, there is another pair of sensors (70)(71), which will determine if the part (6) was positioned correctly, and can be removed from the line in case of positioning failure through an air nozzle (72), where the part returns to the start of the cycle.

In this step, a motorized linear shaft connected to a lateral guide (73) is provided as shown in Figure 20. The assembly forms a restriction on positioning, forcing the parts (6) to align in the direction of the length of the conveyor (4). This results in a minimal variation of the position of the parts in relation to the stamping area (80).

This lateral guide (73) contains two sensors (70)(71) used for checking parts. The first sensor (70) to be activated is responsible for measuring the partand verifying that it is in the correct position. An air blow is used to remove thispart in the cycle as already addressed, if it is not positioned correctly. The rejected part goes back to the start of the cycle. The second sensor (71) is used to send the laser the stamping order and also the part count.

By interconnecting the readings between the sensors (70)(71), it can be verified whether the part (6) actually reached the stamping area (80), or got stuckin the path between the air nozzle (72) and the stamping area (80), if the expected time for the passage of the part (6) between the sensors (70)(71) is exceeded. In this case, the equipment enters the "Cleaning 2" mode, in which all systems of the equipment are stopped, followed by the opening of the gauge of Step 7. After the gauge is opened, the exit conveyor (4) is reversed with the air nozzle (72) switched on for a predetermined time, which has its direction changed again to thenormal exit direction still with the nozzle (72) activated for another period of time.

As a result, the part(s) that are stuck in the system are removed from the process. All parameters are saved by part models and can be modified according to the needs of each model. After this procedure, the gauge measurement is adjusted again and finally returns to the automatic cycle.

### Step 8

The stamping step (80) of the production and traceability information is performed by laser or ink-jet equipment. Parts are properly stamped and accounted for in the system.

In the laser stamper, there is a stamping area, which can be from 100x100 mm to 300x300 mm, depending on the focus lens used. Within this area, it is possible to position the code stamp in any location electronically, without the need for mechanical movement.

For the ink-jet stamper, the fixed stamp is positioned, requiring an auxiliary horizontal axis, for the correct positioning of the stamping head in relation to the trajectory of the part on the conveyor.

In the use of both the laser and the ink-jet, it is necessary to compensate the height of the stamper in relation to the part (6), since both systems depend ona fixed distance between the stamping head and the part. This compensation is required due to equipment processing parts from different stamping heights. Which is compensated with a linear axis (82) mounted vertically,driven with stepper motors and referenced from the conveyor height.

It is stamped while the part is in motion, with this travel speed informed to the stamper by means of an encoder (81) coupled directly to the conveyor.

### Step 9

The items are packaged after they are stamped, where the conveyor (4) deposits the parts (6) inside the pre-formed package, being closed when thenumber of parts per package is reached, which will be positioned for collection.

In the formation of the package, the packaging machine (90) prints the traceability code on it, so that they are correctly forwarded to the storage and shipping processes.

In short, with the parts delivered to the system, they are mechanically positioned by means of fins, accessories molded by part model and varied sensors, all integrated into the logical control of the equipment to ensure the correct positioning of the parts. This is then subdivided into steps, as shown in Figure 14, where each step is responsible for performing a movement, where atthe end the part is correctly positioned for the barcode to be stamped and subsequent packaging.

The conveyor (3) is responsible for advancing and reversing in the direction of movement to correct the possible back up of parts (6) in the tipper system (20). Its speed is approximately 80% of the conveyor (3A) and its drive is independent, being able to adjust the speed of the conveyor according to the need.

The conveyor (3A) has a fixed direction of movement and its speed is approximately 55% of the conveyor (4). The two conveyors (3A)(4) are mechanically coupled by means of gears. This difference in speed occurs so that when the parts are directed to the conveyor belt (4), this mechanism creates a spacing between the parts (6) so that there is no failure in the reading of the stamping sensor or in the stamping itself.

The conveyor belt (4) transports the parts (6) through the other positioners, ending with the passage through the stamping area (80) and delivery of the partsto the packaging machine (90). Its drive is independent, being able to adjust the speed of the conveyor according to the need.

### Positioning and stamping cycle by part model

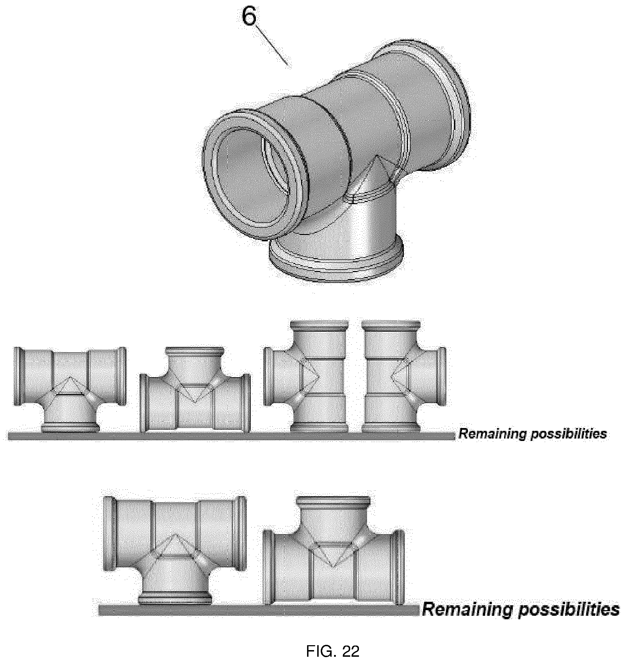

According to the sequence shown in Figure 22, the Te parts reach Step 1 ofthe positioner (10) without a defined position. When passing through the helical rollers (11), they are oriented to stay with their length in the same direction of the movement of the conveyor (3), leaving four possibilities of positions. When passingthrough the tippers (20), the parts that have their longest length vertically are repositioned in the step (2), leaving two possibilities. The parts move away from each other as they move from one conveyor belt to another in Step 3. In Step 4,the parts that have their largest base facing downwards are tipped sideways to theright; the others are slightly deflected and continue to Step 5, being tipped in the same position as the other parts, being aligned on the same axis to be stamped in Step 8.

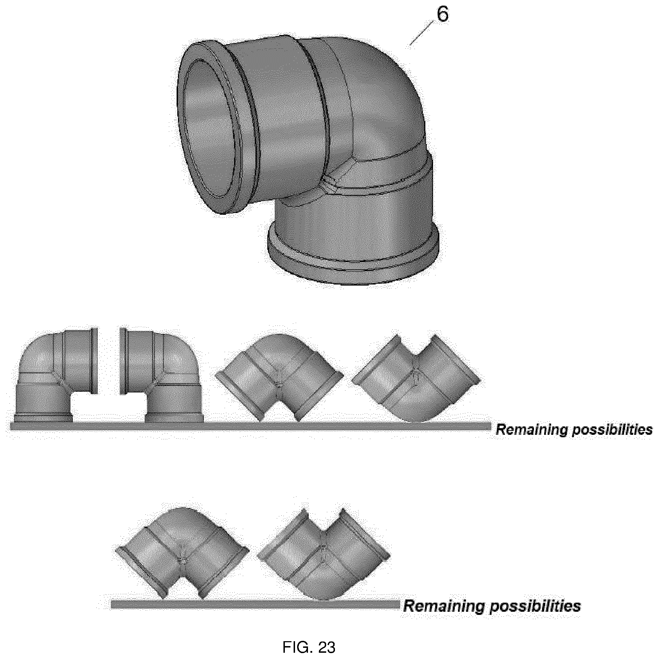

According to the sequence shown in Figure 23, the elbow parts reach Step
1 of the positioner (10) without a defined position. When passing through the helical rollers (11), they are oriented to stay with their length in the same direction of the movement of the conveyor, leaving four possibilities of positions. When passing through the tippers (20), the parts (6) that have their longest lengthvertically are repositioned in Step 2, leaving two possibilities. The parts (6) move away from each other as they move from one conveyor belt to another in Step 3. Its size is measured by the sensor corresponding to its gauge, which is positioned in Step 3, allowing the system to know the position of the part. In Step 4, the roller system is actuated depending on the value measured by the sensor of the previous step. Remaining in position so that the part (6) falls to the correct side when passing through the mechanism. When they reach Step 6, they are aligned on the same axis to be stamped in Step 8.

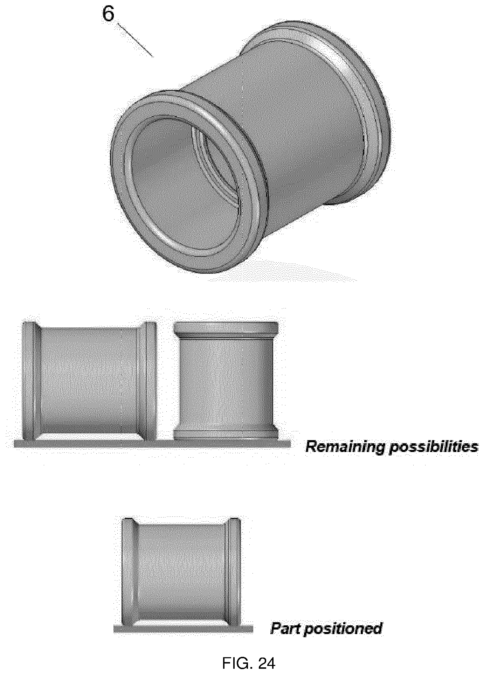

According to the sequence shown in Figure 24, the weldable sleeve parts reach Step 1 of the positioner (10) without a defined position. When passing through the helical rollers (11), they are oriented to stay with their length in the same direction of the movement of the conveyor (3), leaving two possibilities of positions. When passing through the tippers (20), the parts (6) that have their longest length vertically are repositioned in Step 2. They are positioned and only need to be transported in Step 7. The parts move away from each other as they move from one conveyor belt to another in Step 3. In Step 4, the roller system (40) is in a working position for 50mm parts, so that the parts (6) can pass through without interference under the mechanism, as in Step 5. When they reach Step 7, they are already aligned on the same axis to be stamped in Step 8.

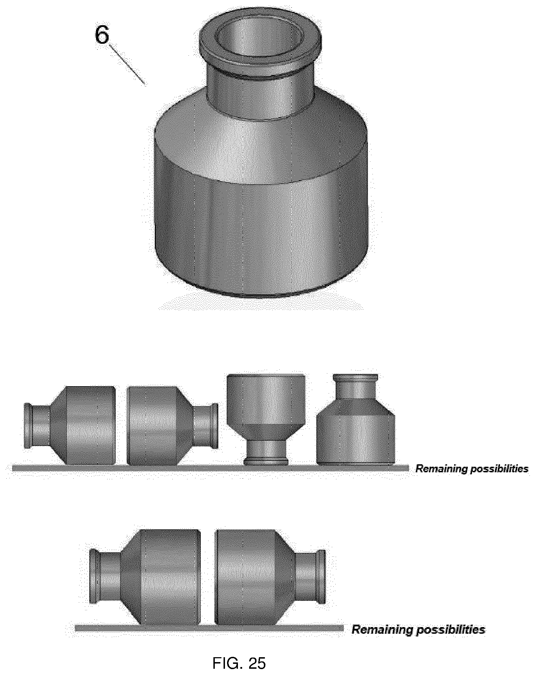

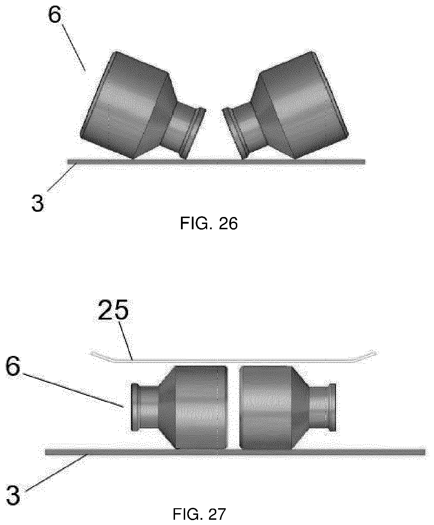

According to the sequence shown in Figure 25, the reducer parts reach Step 1 of the positioner (10) without a defined position. When passing through the helical rollers (11), they are oriented to stay with their length in the same direction of the movement of the conveyor (3), leaving four possibilities of positions. When passing through the tippers (20), the parts (6) that have their longest lengthvertically are repositioned in Step 2. This particular model has a particularity. As shown in Figure 26, when passing through the junction between the conveyors (2) and (3) in Step 3, an unwanted movement of the part (6) may occur because its center of mass is displaced from the support base, being inclined in relation to the conveyor. To avoid this movement, as shown in Figure 27, an upper guide (25) installed on the junction of the conveyors is used and (3), so that there is not enough space for the part (6) to lean to a point of no return, forcing it to return to the flat base in relation to the conveyor belt (3) when passing through the junction. The parts (6) move away from each other as they move from one conveyor belt to another in Step 3. In step 4, the roller system (40) is in a working position for50mm parts, so that the parts can pass through without interference under the mechanism. They reach Step 7 already aligned on the same axis to be stamped in Step 8. Even arriving with two position possibilities in the stamping step (80), this does not affect the stamping, since the sensor takes the reading in the lowest position of the part, dispersing the bottleneck of the part in this case.

It is important to emphasize that the figures and description made do not have the ability to limit the forms of execution of the inventive concept proposed herein, but rather to illustrate and help explain the conceptual innovations revealedin this solution. Thus, the descriptions and images must be interpreted in an illustrative and non-limiting manner, and there may be other equivalent or analogous ways of implementing the inventive concept disclosed herein and that do not escape the spectrum of protection outlined in the proposed solution.

## Claims

1. **EQUIPMENT FOR STAMPING BARCODES ON SEPARATE HYDRAULIC CONNECTIONS, WITH AUTOMATED POSITIONING FOR COUNTING, STAMPING AND PACKAGING PARTS characterized in that** it includes two conveyor belts (1)(2) interconnected, receiver (5) consisting of an inclined tray coupled to the conveyor belt (2) that directs the parts (6) to the longitudinal positioner (10), which contains gutters (12) that direct the parts (6) to the set of helical rollers (11) equipped with helical gears that rotate in opposite directions; said rollers (11) move in opposite directions forcing the parts (6) to rotate on their axis and having their lateral movement limited by two lateral limiters (13); (3) constructed on the base with rubber straps that has motorization similar to the conveyor belt (1), and transports the parts
(6) to the two rotary tippers (20), preferably equipped with rods (21) on the cardinal and collateral axes that touch the parts (6) at their upper end; a pair of sensors (22)(23), a first sensor (22) of contact with the part and a sensor after (23) to prevent back up when tipping; on the conveyor belt (4) position sensors are provided to determine which side the part (6) should tip over by means of the pneumatic tippers (40), each tipper (40) being based on a set of double-acting cylinders (41)(42) driven with a double-solenoid valve; a reducer guide (25) with automatic mechanism controlled by pneumatic cylinder (30), configured in the preset; said pneumatic tippers
(40) present height adjustment and selection of fin side (45), the height adjustment movement being made through the pneumatic cylinders (41) to determine which gauge of the parts will be used by placing the fins (45) to work at the correct height to perform the lateral tipping, adjusted in the preset; the selection of which side the part
(6) must tip is made by alternating which side the fin (45) of the tipper will be used by making the controlled obstruction of the path where the part passes through the fin, selected by means of a pneumatic cylinder (42) mounted horizontally, and its stroke limits are used for the system to recognize the selected position of the fins; bulkheads (43)(44), which allow the parts (6) to first hit the upper bulkhead (44), which will cause it to be thrown to the left by the lower bulkhead (43) to rotate and tip it laterally; passive turning system (60) formed by bulkheads (61) and the movement of the conveyor belt (4) that forces the part to rotate 180°, all with the same positioning for stamping; a pair of sensors (70)(71), which determine whether the part (6) has been positioned correctly, and can be removed from the line in case of failure in positioning by means of an air nozzle (72), where the part goes back to the start of the cycle; a motor shaft connected to a side guide (73) that restricts the positioning, forcing the parts (6) to align in the direction of the length of the conveyor (4); stamping (80) of the production and traceability information by the laser or ink-jet equipment; andpackaging machine (90) that prints the traceability code in the formation of the parts package (6).

2. **EQUIPMENT FOR STAMPING BARCODES ON SEPARATE HYDRAULIC CONNECTIONS, WITH AUTOMATED POSITIONING FOR COUNTING, STAMPING AND PACKAGING PARTS** according to claim 1, and **characterized in that** the conveyor belts (1)(2) external to the equipment have programmable speed adjustment and an intermittent mode, which determines the time each conveyor belt is turned on and off separately.

3. **EQUIPMENT FOR STAMPING BARCODES ON SEPARATE HYDRAULIC CONNECTIONS, WITH AUTOMATED POSITIONING FOR COUNTING, STAMPING AND PACKAGING PARTS** according to claim 1, and **characterized in that** the conveyor belt (1) is constructed based on a belt equipped with rubber strips (1A), pulled by a geared motor and drive with frequency inverter, and the structure is made of steel and rolling shafts; and furthermore, it is composed of a reservoir (1C) positioned below the gate (1B), interconnected to the slide (1D) coupled to the conveyor belt (2).

4. **EQUIPMENT FOR STAMPING BARCODES ON SEPARATE HYDRAULIC CONNECTIONS, WITH AUTOMATED POSITIONING FOR COUNTING, STAMPING AND PACKAGING PARTS** according to claim 1, and **characterized in that** the conveyor belt (2) is constructed based on a belt equipped with a smooth rubber strap, pulled by a geared motor and drive with frequency inverter, and the structure is made of steel and rolling shafts; and also contain rubber strips (2A) welded to the rubber band.

5. **EQUIPMENT FOR STAMPING BARCODES ON SEPARATE HYDRAULIC CONNECTIONS, WITH AUTOMATED POSITIONING FOR COUNTING, STAMPING AND PACKAGING PARTS** according to claim 1, and **characterized in that** the receiver (5) can be replaced by a meter coupled to an electromagnetic vibrator that provides a continuous and controlled movement.

6. **EQUIPMENT FOR STAMPING BARCODES ON SEPARATE HYDRAULIC CONNECTIONS, WITH AUTOMATED POSITIONING FOR COUNTING, STAMPING AND PACKAGING PARTS** according to claim 1, and **characterized in that** the helical rollers (11) to be constructed of polymeric material and driven by stepper motors with constant speed; and the rollers (11) along with the lateral limiters (13), have linear movement mechanism for each sideof the conveyor (3), being adjusted according to the gauge of the parts (6); and their movement to be determined by electronic control and driven by stepper motors and trapezoidal spindles.

7. **EQUIPMENT FOR STAMPING BARCODES ON SEPARATE HYDRAULIC CONNECTIONS, WITH AUTOMATED POSITIONING FOR COUNTING, STAMPING AND PACKAGING PARTS** according to claim 1, and **characterized in that** the rotating tippers (20) are driven by a stepper motor with constant speed and have the height determined in the electronic control, with the height variation being performed by a lifting mechanism with stepper motor and spindle with trapezoidal thread.

8. **EQUIPMENT FOR STAMPING BARCODES ON SEPARATE HYDRAULIC CONNECTIONS, WITH AUTOMATED POSITIONING FOR COUNTING, STAMPING AND PACKAGING PARTS** according to claim 1, and **characterized in that** the laser stamper has a stamping area, which can be from 100x100 mm up to 300x300 mm, depending on the focus lens.

9. **EQUIPMENT FOR STAMPING BARCODES ON SEPARATE HYDRAULIC CONNECTIONS, WITH AUTOMATED POSITIONING FOR COUNTING, STAMPING AND PACKAGING PARTS,** according to claim 1, and **characterized in that** the Ink-jet stamper, have the positioning of the fixed stamping, requiring an auxiliary horizontal axis, for the correct positioning of the stamping head in relation to the trajectory of the part on the conveyor (4).

10. **EQUIPMENT FOR STAMPING BARCODES ON SEPARATE HYDRAULIC CONNECTIONS, WITH AUTOMATED POSITIONING FOR COUNTING, STAMPING AND PACKAGING PARTS** according to claim 1, and **characterized in that** the use of the laser as an ink-jet requires compensation of the height of the stamper in relation to the part (6), by means of a linear axis (82) mounted vertically, driven with stepper motors and referenced from the height of the conveyor.

11. **EQUIPMENT FOR STAMPING BARCODES ON SEPARATE HYDRAULIC CONNECTIONS, WITH AUTOMATED POSITIONING FOR COUNTING, STAMPING AND PACKAGING PARTS** according to claim 1, and **characterized in that** it is stamped with the part in motion, having this travel speed informed to the stamper by means of an encoder (81) directly coupled to the conveyor (4).

12. **METHOD FOR STAMPING BARCODES ON SEPARATE HYDRAULIC CONNECTIONS, WITH AUTOMATED POSITIONING FOR COUNTING, STAMPING AND PACKAGING PARTS, characterized in that** it includes the following steps:
a) Move the parts (6) to the positioning system by conveyor belts(1)(2), where the first belt (1) receives them directly from the injector by gravity and takes them to the second belt (2);
b) The parts (6) are delivered by the conveyor (2), by gravity, to the gutters (12) that direct them to the helical rollers (11);
c) The rollers (11) act in opposite directions forcing the parts (6) to rotate on their axis until they are in the longitudinal position, falling by gravity onto the conveyor (3);
d) The conveyor belt (3) transport the parts (6) to the rotating tippers, (20) which make them conform to the delimited height, turning them when necessary;
e) The parts (6) pass through the first sensor (22) before the tippers (20) and after being turned, the parts (6) pass in front of the second sensor (23), after a small interval of time;
f) The reducer guide (25) is optionally actuated by pneumatic cylinder (30);
g) The position sensors determine which side the part (6) should tip over through the pneumatic tippers (40);
h) On the tippers, (40) adjust the height and select the fin side (45) guiding the part (6) so that it falls to the opposite side of the selectedfin;
i) The Te connections pass through the passive tipping system, where a mechanism is presented to be placed or removed from the route with tippers (40);
j) Elbows and 90° curves go through a passive turning system (60) turning the parts 180° depending on the position they are in;
k) A pair of sensors (70)(71) determine whether the part (6) has been positioned correctly and can be removed from the line in the event ofa positioning failure by the air nozzle (72), where the part returns to the start of the cycle;
l) The stamping (80) of the production and traceability information tobe performed by a laser or ink-jet equipment, and the parts to be stamped and accounted for;
m) package the items after they are stamped, where the conveyor (4) deposits the parts (6) inside the preformed package, being closed when the number of parts per package is reached, which will be positioned for collection.

13. **METHOD FOR STAMPING BARCODES ON SEPARATE HYDRAULIC CONNECTIONS, WITH AUTOMATED POSITIONING FOR COUNTING, STAMPING AND PACKAGING PARTS** according to claim 12, and **characterized in that** in step a) the conveyor (1) operates with continuous or intermittent movement, opting according to the connection model.

14. **METHOD FOR STAMPING BARCODES ON SEPARATE HYDRAULIC CONNECTIONS, WITH AUTOMATED POSITIONING FOR COUNTING, STAMPING AND PACKAGING PARTS** according to claim 12, and **characterized in that** in step d) the height of the tippers (20) is determined according to the shape of each part, only allowing the passage of parts that are properly laid, which eliminates one to two possibilities of position depending on each model.

15. **METHOD FOR STAMPING BARCODES ON SEPARATE HYDRAULIC CONNECTIONS, WITH AUTOMATED POSITIONING FOR COUNTING, STAMPING AND PACKAGING PARTS** according to claim 12, and **characterized in that** in step e) the time interval is given by the ratio of the distance between the sensors (22)(23) by the speed of the conveyor belt (3), each part (6) will have a specific time to be positioned beyond the time of passage bythe sensors (22)(23).

16. **METHOD FOR STAMPING BARCODES ON SEPARATE HYDRAULIC CONNECTIONS, WITH AUTOMATED POSITIONING FOR COUNTING, STAMPING AND PACKAGING PARTS,** according to claims 12 and 15, and **characterized in that** in step e) it is verified that the part (6) has already reached the first sensor (22) and a longer time than specified for the model if it is reached, without the second sensor (23) being activated, the control understands that there was a back up in the tipping procedure; reversing the rotation of the conveyor (1), freeing space to enable the correct positioning of the part (6) and unclogging the system so that it can return to normal operation.

17. **METHOD FOR STAMPING BARCODES ON SEPARATE HYDRAULIC CONNECTIONS, WITH AUTOMATED POSITIONING FOR COUNTING, STAMPING AND PACKAGING PARTS** according to claim 12, 15 and 16, and **characterized in that** in stepe) the time limit for this passage between one sensor (22) and another sensor (23) to be configurable according to the need and saved for each part model (6); and when the procedure is performed unsuccessfully, it enters the "Cleaning 1" part extraction mode.

18. **METHOD FOR STAMPING BARCODES ON SEPARATE HYDRAULIC CONNECTIONS, WITH AUTOMATED POSITIONING FOR COUNTING, STAMPING AND PACKAGING PARTS** according to claim 17, and **characterized in that** in step e) the cleaning mode is responsible for removing all parts (6) that are on the conveyor belt (3) and expelling them so that they return to the inlet conveyor (1), returning to the cycle; opening the lateral bulkheads (13), raising the tippers (20) to release the parts (6) that are stuck, connecting the conveyor (3) and the air nozzle to remove them from the system and return to the start of the cycle on the conveyor (3), until there are no parts (6) obstructing the operation of the equipment.

19. **METHOD FOR STAMPING BARCODES ON SEPARATE HYDRAULIC CONNECTIONS, WITH AUTOMATED POSITIONING FOR COUNTING, STAMPING AND PACKAGING PARTS** according to claim 17, and **characterized in that** in step f) the guide (25) is only actuated for reducer parts.

20. **METHOD FOR STAMPING BARCODES ON SEPARATE HYDRAULIC CONNECTIONS, WITH AUTOMATED POSITIONING FOR COUNTING, STAMPING AND PACKAGING PARTS** according to claim 17, and **characterized in that** in step h) the mechanism is used for the Te and Elbow connections; for other models of parts, the mechanism is raised so that the parts (6) pass freely under the system, without any interaction with the parts.

21. **METHOD FOR STAMPING BARCODES ON SEPARATE HYDRAULIC CONNECTIONS, WITH AUTOMATED POSITIONING FOR COUNTING, STAMPING AND PACKAGING PARTS** according to claims 12 and 19, and **characterized in that** in step h) for the Elbow, the selection is made usingsensors, being positioned according to the position in which the part is and for the Te, the mechanism is selected in the preset, not requiring active movement.

22. **METHOD FOR STAMPING BARCODES ON SEPARATE HYDRAULIC CONNECTIONS, WITH AUTOMATED POSITIONING FOR COUNTING, STAMPING AND PACKAGING PARTS** according to claim 12, and **characterized in that** in step i) the conveyor belt (3) transports the parts by the rotating tippers (20), where there are two possibilities of positions (50)(51) for this part model, and the parts (6) with the larger base (51) facing downwards are tipped to the right and the others pass freely (50).

23. **METHOD FOR STAMPING BARCODES ON SEPARATE HYDRAULIC CONNECTIONS, WITH AUTOMATED POSITIONING FOR COUNTING, STAMPING AND PACKAGING PARTS** according to claim 12, and **characterized in that** in step j) the parts that are opposite to the desired position get stuck in the bulkheads (61) and the movement of the conveyor (4) forces the parts to rotate 180°, all with the same positioning for stamping.

24. **METHOD FOR STAMPING BARCODES ON SEPARATE HYDRAULIC CONNECTIONS, WITH AUTOMATED POSITIONING FOR COUNTING, STAMPING AND PACKAGING PARTS** according to claim 12, and **characterized in that** in step k) the first sensor (70) to be actuated measures the part and verifies that it is in the correct position; and an air blow is used to remove this part in the cycle, if it is not correctly positioned, whose rejected part goes back to the start of the cycle.

25. **METHOD FOR STAMPING BARCODES ON SEPARATE HYDRAULIC CONNECTIONS, WITH AUTOMATED POSITIONING FOR COUNTING, STAMPING AND PACKAGING PARTS** according to claim 12, and **characterized in that** in step k) the second sensor (71) sends the stamping order to the laser as well as the parts count.

26. **METHOD FOR STAMPING BARCODES ON SEPARATE HYDRAULIC CONNECTIONS, WITH AUTOMATED POSITIONING FOR COUNTING, STAMPING AND PACKAGING PARTS,** according to claim 12, and **characterized in that** in step k) interconnect the readings between the sensors (70)(71), to verify that the part (6) reached the stamping area (80), or got stuck in the path between the air nozzle (72) and the stamping area (80), if the expected time for the passage of the part (6) between the sensors (70)(71) is exceeded.

27. **METHOD FOR STAMPING BARCODES ON SEPARATE HYDRAULIC CONNECTIONS, WITH AUTOMATED POSITIONING FOR COUNTING, STAMPING AND PACKAGING PARTS** according to claims 12 and 25, and **characterized in that** in step k) the equipment enters into the "Cleaning 2"mode, in which for all systems of the equipment, continuing with the opening of thegauge and, after the gauge is opened, reversal of the exit conveyor (4) is made with the air nozzle (72) turned on for a pre-determined time, which has its directionchanged again to the normal direction of exit still with the nozzle (72) actuated for another period of time.

28. **METHOD FOR STAMPING BARCODES ON SEPARATE HYDRAULIC CONNECTIONS, WITH AUTOMATED POSITIONING FOR COUNTING, STAMPING AND PACKAGING PARTS** according to claim 12, and **characterized in that** in step m), in the formation of the package, the packer (90) prints the traceability code on it and is then forwarded to the storage and shipping processes.
